# EUROPEAN PATENT APPLICATION

(11) **EP 2 433 494 A1**
(43) Date of publication of application: **28.03.2012**
(21) Application number: 10777693.2
(22) Date of filing: 13.05.2010
(51) Int. Cl.: A01N 25/00, A01M 1/02, A01N 37/06, A01P 19/00

(54) **METHOD FOR DISRUPTING COMMUNICATION OF GRAPE VINE MOTH AND EUROPEAN GRAPE BERRY MOTH**

(30) Priority: 18.05.2009 JP 2009119755
(71) Applicant: Shin-Etsu Chemical Co., Ltd., Tokyo 100-0004 (JP)
(72) Inventor: OGAWA, Kinya, Tokyo 100-0004 (JP); OGURA, Kouichi, Tokyo 100-0004 (JP); HOJO, Tatsuya, Joetsu-shi Niigata 942-8601 (JP); FUKUMOTO, Takehiko, Joetsu-shi Niigata 942-8601 (JP)
(74) Representative: Larcher, Dominique
(86) International application number: PCT/JP2010/058094
(87) International publication number: WO 2010/134460

(57) **Abstract**

European grapevine moth (GVM) and European grape berry moth (EGBM), which are main pest insects of grapes in Europe, are controlled simultaneously by using a respective sex pheromone substance.

Provided is a method for simultaneously controlling GVM and EGBM comprising the steps of incorporating, into a GVM sex pheromone mating disruptant, 5 to 30% by weight of an EGBM sex pheromone component based on an amount of a GVM sex pheromone component in the GVM sex pheromone mating disruptant at the time when in a district A where GVM is a main pest insect, a secondary pest insect EGBM has emerged or is likely to emerge, thereby obtaining a mating disruptant of both GVM and EGBM; or incorporating, into an EGBM sex pheromone mating disruptant, 5 to 35% by weight of a GVM sex pheromone component based on an amount of an EGBM sex pheromone component in the EGBM sex pheromone mating disruptant at the time when in a district B where EGBM is a main pest insect, a secondary pest insect GVM has emerged or is likely to emerge, thereby obtaining a mating disruptant of both GVM and EGBM.

## Description

### TECHNICAL FIELD

The present invention relates to a mating disruption method for simultaneously controlling grapevine moth (*Lobesia botrana,* hereinafter abbreviated as "GVM") and European grape berry moth *(Eupoecilia ambiguella,* abbreviated as "EGBM"), which are the most important pest insects of grapes in Europe, by releasing sex pheromone substances of these moths in a field to disrupt their mating behaviors.

### BACKGROUND ART

Mating disruption for the control of a pest insect is carried out by releasing and suspending, in the air, an artificially synthesized sex pheromone substance of a pest inset to be controlled to disrupt the communication between males and females of that species for decreasing their mating rate, and thereby controlling the reproduction of the insect pest of next generation. Such an insect control method using a sex pheromone substance is greatly expected because it has no adverse effect on human beings, animals, natural predators or environments. However, it has following defects compared with control with an insecticide. One of the defects is that when the method is used in a narrow area, it is difficult to maintain the concentration of a sex pheromone substance and pest insects of the same species to be controlled sometimes jump in from the outside of the area or it may be difficult to maintain the number of natural enemies at the same level. The second defect is that a sex pheromone substance is species-specific so that it is not effective even against similar pest insects. The third defect is that at the time when a pest population density is high and control of the pest insect is greatly needed, the mating disruption effect of a sex pheromone substance decreases. The control method with a sex pheromone substance therefore has not yet gained popularity as expected.

With regard to the first defect, it is known that a sex pheromone mating disruptant has an increased effect when used in a large area so that this defect can be overcome by carrying out control of a pest population. In addition, the amount of the sex pheromone mating disruptant can be decreased gradually. In a district where 500 tubes/ha of a sex pheromone mating disruptant were used at the initial stage, the number of tubes/ha can be decreased even to 250 to 350 in several years due to a reduction in the population density. On the other hand, the third defect is overcome by starting the pest control from the first generation that is considered to cause less severe damage.

In order to resolve the second defect, particularly when two or more pest insects are to be controlled, a plurality of sex pheromone substances should be used because a sex pheromone substance is specific to only one species and does not act even on a pest insect of a similar species. For example, with regard to apples, there are two apple pest insects, a codling moth (hereinafter abbreviated as "CDM") and a leaf roller (hereinafter abbreviated as "LR") so that a mating disruptant comprising sex pheromone substances of these two insects is employed.

### PRIOR ART DOCUMENT

### NON-PATENT DOCUMENT

[NON-PATENT DOCUMENT 1] IOBC/WPRS Bulletin 24(2), 65-69(2001)
[NON-PATENT DOCUMENT 2] IOBC/WPRS Bulletin 24(2), 71-73(2001)

### SUMMARY OF THE INVENTION

### PROBLEM TO BE SOLVED BY THE INVENTION

In districts north of Germany where temperature is low, EGBM has conventionally been found as a main pest insect and almost no damage due to GVM is recognized in plots sprayed with an insecticide. On the other hand, in southern European countries such as Italy and Spain, GVM is a main pest insect and EGBM is not recognized.
In Trentino, Italy, a control method with a sex pheromone substance of GVM achieved success and a sex pheromone mating disruptant was used in a large area. However, a gradual increasing phenomenon of EGBM is sometimes found because spraying of an insecticide has been omitted for years. Organophosphorus agents and pyrethroids, which are insecticides, are expected to produce a control effect on both GVM and EGBM, but a mating disruptant using a sex pheromone of GVM has no effect on EGBM and vice versa. Although GVM and EGBM are pest insects very similar to each other, a sex pheromone substance of GVM is E7,Z9-dodecadienyl acetate (E7Z9-12:Ac) and a sex pheromone substance of EGBM is Z9-dodecenyl acetate (Z9-12:Ac). One substance has no inhibitory effect on the other substance, while one substance has no mating disruption effect on the other substance. Accordingly, in such a district, a mating disruptant of GVM and a mating disruptant of EGBM have been used simultaneously, or a mating disruptant comprising a mixture of their sex pheromone substances at an almost equivalent ratio has been used. As a result, control with a mating disruptant lacks cost-effectiveness in comparison with control with an insecticide.

The present invention relates to a simultaneous control method of GVM and EGBM, which are the most important pest insects of grapes in Europe, by using respective sex pheromone substances of both insects. In particular, the invention relates to a control method to be employed when in a district where one pest insect is main, the other pest insect has emerged or is likely to emerge.

### MEANS FOR SOLVING THE PROBLEM

Considering that the effect of a sex pheromone disruption method varies depending on the population density of a pest insect, the present inventors have investigated the control effect of a GVM sex pheromone mating disruptant having a small amount of an EGBM sex pheromone substance added, on the first and later generations whose pest population density is relatively low. As a result, it has been found that simultaneous control of two pest insects can be achieved by adjusting the amount of the EGBM sex pheromone substance, depending on the initial population density of EGBM.
Specifically, it has been found that in a district where no damage due to EGBM was recognized as the insecticide was applied and then annual control with a GVM sex pheromone mating disruptant alone was carried out,
when a percentage of damaged bunches due to EGBM was 3% or less at the end of the previous year, addition of 5 to 20% by weight of the EGBM sex pheromone component based on the conventional dosage amount of the GVM sex pheromone component in a GVM sex pheromone mating disruptant enables the simultaneous control of both EGBM and GVM, while
when the percentage of damaged bunches due to EGBM exceeds 3%, addition of greater than 10% by weight but not greater than 30% by weight of the EGBM sex pheromone based on the conventional dosage amount of the GVM sex pheromone component in a GVM sex pheromone mating disruptant component enables the simultaneous control of both EGBM and GVM.

In the present invention, it has been found that a main pest insect and a secondary pest insect can be controlled simultaneously by adding a small amount of the sex pheromone substance of the secondary pest insect to a sex pheromone mating disruptant of the main pest insect so that a control method of using a mating disruptant obtained by adding, to a sex pheromone mating disruptant of the main pest insect, a small amount of the sex pheromone substance of the secondary pest insect is useful.
The present invention provides a method for simultaneously controlling GVM and EGBM comprising the steps of:
incorporating, into a GVM sex pheromone mating disruptant, 5 to 30% by weight of an EGBM sex pheromone component based on an amount of a GVM sex pheromone component comprised by the GVM sex pheromone mating disruptant at the time when in a district A where GVM is a main pest insect, a secondary pest insect EGBM has emerged or is likely to emerge, thereby obtaining a mating disruptant of both GVM and EGBM, or incorporating, into an EGBM sex pheromone mating disruptant, 5 to 35% by weight of a GVM sex pheromone component based on an EGBM sex pheromone component comprised by the EGBM sex pheromone mating disruptant at the time when in a district B where EGBM is a main pest insect, a secondary pest insect GVM has emerged or is likely to emerge, thereby obtaining a mating disruptant of both GVM and EGBM; and
installing the former mating disruptant of both GVM and EGBM in the district A or installing the latter mating disruptant of both GVM and EGBM in the district B.
The present invention also provides a mating disruptant of GVM and EGBM for the simultaneous control of GVM and EGBM comprising at least a GVM sex pheromone substance and an EGBM sex pheromone substance, wherein an amount of the EGBM sex pheromone substance is from 5 to 30 parts by weight based on 100 parts by weight of the GVM sex pheromone substance, or an amount of the GVM sex pheromone substance is from 5 to 35 parts by weight based on 100 parts by weight of the EGBM sex pheromone substance.

### EFFECT OF THE INVENTION

It is conventionally considered that when a secondary pest insect EGBM has emerged or is likely to emerge in a district where GVM is a main pest insect, or when a secondary pest insect GVM has emerged or is likely to emerge in a district where EGBM is a main pest insect, both GVM and EGBM sex pheromone mating disruptants should be used simultaneously or a mating disruptant comprising a mixture of sex pheromone substances of these two pest insects at an almost equivalent ratio should be used. As a result, control with a mating disruptant lacks cost-effectiveness in comparison with control with an insecticide.
Using a mating disruptant comprising a small amount of a sex pheromone substance of a secondary pest insect added to a mating disruptant of a main pest insect according to the present invention, however, enables the simultaneous control of these two pest insects while keeping economical efficiency. Compared with a mating disruptant comprising a mixture of a GVM sex pheromone substance and an EGBM sex pheromone substance at a substantially equivalent ratio, the mating disruptant of the present invention can save the amount of sex pheromone substances. In addition, compared with use of both GVM and EGBM sex pheromone mating disruptants, such a disruptant facilitates the installation work because the number of disruptants installed can be reduced.

### EMBODIMENTS FOR CARRYING OUT THE INVENTION

According to the present invention, the simultaneous control method of GVM and EGBM is a control method using a mating disruptant obtained by incorporating, into a GVM sex pheromone mating disruptant, 5 to 30% by weight of an EGBM sex pheromone substance based on the amount of a GVM sex pheromone substance contained in the GVM sex pheromone mating disruptant, when in a district, where GVM is a main pest insect, a secondary pest insect EGBM has emerged, or is likely to emerge. It is also a control method using a mating disruptant obtained by incorporating, into an EGBM sex pheromone mating disruptant, 5 to 35% by weight of a GVM sex pheromone substance based on the amount of an EGBM sex pheromone substance contained in the EGBM sex pheromone mating disruptant, when in a district, where EGBM is a main pest insect, a secondary pest insect GVM has emerged, or is likely to emerge.

More specifically, the present invention also relates to a control method using a mating disruptant obtained by adding, to a GVM sex pheromone mating disruptant, 5 to 20% by weight, preferably 8 to 20% by weight, more preferably 10 to 20% by weight of an EGBM sex pheromone substance based on the amount of a GVM sex pheromone component contained in the GVM sex pheromone mating disruptant, when a percentage of damage due to EGBM in the previous year is from 0 to 3% in a district where GVM is a main pest insect; and to a control method using a mating disruptant obtained by adding, to a GVM sex pheromone mating disruptant, greater than 10% by weight but not greater than 30% by weight, preferably greater than 15% by weight but not greater than 30% by weight, more preferably greater than 20% by weight but not greater than 30% by weight of an EGBM sex pheromone substance based on the amount of the GVM sex pheromone component contained in the GVM sex pheromone mating disruptant, when a percentage of damage due to EGBM in the previous year exceeds 3%. In addition, the present invention relates to control prior to the emergence of the main pest insect GVM and the secondary pest insect EGBM.

On the other hand, the present invention relates to a control method using a mating disruptant obtained by adding, to an EGBM sex pheromone mating disruptant, 5 to 20% by weight, preferably 8 to 20% by weight, more preferably 10 to 20% by weight of a GVM sex pheromone substance based on the amount of the EGBM sex pheromone component contained in the EGBM sex pheromone mating disruptant, when a percentage of damage due to GVM in the previous year is from 0 to 3% in a district where EGBM is a main pest insect; and to a control method using a mating disruptant obtained by adding, to an EGBM sex pheromone mating disruptant, greater than 10% by weight but not greater than 35% by weight, preferably greater than 15% by weight but not greater than 30% by weight, more preferably greater than 20% by weight but not greater than 30% of a GVM sex pheromone substance based on the amount of the EGBM sex pheromone component contained in the EGBM sex pheromone mating disruptant, when a percentage of damage due to GVM in the previous year exceeds 3%. In addition, the present invention relates to control prior to the emergence of the main pest insect EGBM and the secondary pest insect GVM.

The term "percentage of damage" includes a percentage of damaged fruits and a percentage of damaged bunches, depending on the kind of crops to be protected from pest insects. The percentage of damaged fruits is expressed by the equation: {(the number of damaged fruits)/(the number of fruits surveyed)}x100, while the percentage of damaged bunches is expressed by the equation: {(the number of damaged bunches)/(the number of bunches surveyed)}x100. In the present invention, pest insects of grapes are controlled so that the percentage of damaged bunches is used mainly. The number of bunches surveyed is preferably at least 10 bunches/tree x 10 trees = 100 bunches.
The above-described percentage of damage is presumed to serve also as an index of a pest population density. Accordingly, the term "a percentage of damage in the previous year is from 0 to 3%" means that a small number of the second pest insects have emerged or are likely to emerge, while the term "a percentage of damage exceeds 3%" means that the number of the second pest insects exceeds that for percentage of damage being from 0 to 3%. The upper limit is 50%. When the percentage of damage exceeds 50%, the pest insect is regarded as not a second pest insect but a main pest insect. Thus, the main pest insect and the secondary pest insect are distinguished by whether the percentage of damage is greatest or not. However, when control was performed with a mating disruptant, or depending on the type or application method of an insecticide, this is not always true. Accordingly, it is necessary to consider what was a native pest insect in the district or what was a target pest insect controlled with a mating disruptant or insecticide.

When the percentage of damage due to EGBM in the previous year is from 0 to 3% in a district where GVM is a main pest insect, it is desired to use a mating disruptant obtained by adding, to a GVM sex pheromone mating disruptant, 5 to 20% by weight of an EGBM sex pheromone substance based on the amount of the GVM sex pheromone component contained in the GVM sex pheromone mating disruptant. When the amount of the EGBM sex pheromone substance is less than 5% by weight, a release amount decreases so that the effect becomes unstable. When the amount is more than 20% by weight, the cost is excessive for the degree of damage.
When the percentage of damage due to EGBM in the previous year exceeds 3%, it is desired to use a mating disruptant obtained by adding, to a GVM sex pheromone mating disruptant, greater than 10% by weight but not greater than 30% by weight of an EGBM sex pheromone substance based on the amount of the GVM sex pheromone component contained in the GVM sex pheromone mating disruptant. When the amount of the EGBM sex pheromone substance is 10% or less, a release amount decreases and becomes inadequate for the population density of the pest insect so that the effect becomes unstable. When the amount is more than 30% by weight, it is not preferable because of higher cost.

When the percentage of damage due to GVM in the previous year is from 0 to 3% in a district where EGBM is a main pest insect, it is desired to use a mating disruptant obtained by adding, to a an EGBM sex pheromone mating disruptant, 5 to 20% by weight of an GVM sex pheromone substance based on the amount of the EGBM sex pheromone component contained in the EGBM sex pheromone mating disruptant. When the amount of the GVM sex pheromone substance is less than 5% by weight, a release amount decreases so that the effect becomes unstable. When the amount is more than 20% by weight, the cost is excessive for the degree of damage.
When the percentage of damage due to GVM in the previous year exceeds 3%, it is desired to use a mating disruptant obtained by adding, to an EGBM sex pheromone mating disruptant, greater than 10% by weight but not greater than 35% by weight of a GVM sex pheromone substance based on the amount of the EGBM sex pheromone component contained in the EGBM sex pheromone mating disruptant. When the amount of the GVM sex pheromone substance is 10% or less, a release amount decreases and becomes inadequate for the population density of the pest insect so that the effect becomes unstable. When the amount is more than 35% by weight, it is not preferable because of higher cost.

The amount of the EGBM sex pheromone substance to be added to the GVM sex pheromone mating disruptant is preferably from 5 to 30% by weight of the amount of the GVM sex pheromone substance, while the amount of the GVM sex pheromone substance to be added to the EGBM sex pheromone mating disruptant is preferably from 5 to 35% by weight of the amount of the EGBM sex pheromone substance. However, when addition of a small amount of a sex pheromone substance of a secondary pest insect causes a further reduction in the percentage of damage, the amount of it can be reduced, depending on the proportion of damage in the previous year. Two or three years later after use of the mating disruptant is started, a sufficient control effect can be sometimes expected from the addition of from 5 to 25% of the sex pheromone substance of the secondary pest insect.
The amount of the GVM sex pheromone substance to be added is a little greater than that of the EGBM sex pheromone substance to be added because the susceptibility of GVM to the sex pheromone mating disruption method is a little weak and the amount may be determined based on the relationship between the control effect and the amount of the sex pheromone substance. This can be also supported by the fact that when respective mating disruptants of GVM and EGBM are compared, the dosage amount of a GVM sex pheromone substance is a little greater than that of an EGBM one.

The GVM or EGBM sex pheromone substance contained by the mating disruptant is not limited in kind or number insofar as it is the sex pheromone substance of each pest insect. Examples of the GVM sex pheromone substance include E7,Z9-dodecadienyl acetate (E7Z9-12:Ac), while those of the EGBM sex pheromone substance include Z9-dodecenyl acetate (Z9-12:Ac).
The GVM and EGBM sex pheromone substances have a main chain with 12 carbon atoms and acetate as a functional group and thus have similar physical and chemical properties. As a result, they are similar in release properties of the sex pheromone mating disruptant. This works better for the mating disruptant of the present invention. If the release rate of one of the sex pheromone substances is high and this sex pheromone substance is contained in an amount as low as 35% by weight or less, it is released rapidly and the release amount becomes extremely small in the latter stage. Accordingly, even if pest insects are similar and their emergence relates to each other, when the raw material polymer used in a mating disruptant containing their sex pheromone substances is different in membrane permeability and in evaporation rate, it is difficult to be effective for simultaneous control.

A primary cause for success in the control with an extremely small amount whether an EGBM sex pheromone substance is applied to a district where GVM is a main pest insect or a GVM sex pheromone substance is applied to a district where EGBM is a main pest insect is that the control effect by using mating disruption with a sex pheromone substance depends on the pest population density and the control using mating disruption with a sex pheromone is performed at a time of the first generation when the pest generation density is low. It is therefore desired to use the mating disruptant before emergence of the main and secondary pest insects. Even prior to the emergence of the main and secondary pest insects, the possibility of emergence can be known from the emergence of these pest insects in the neighboring districts. Although it is difficult to identify the time when GVM and EGBM emerge because it varies from region to region, depending on hours of sunlight, temperature, humidity, altitude, or kind or breed of crops, they generally emerge from early spring to late autumn. The term "prior to the emergence" therefore means preferably prior to reaching the effective accumulative temperature at which GVM or EGBM adults emerge.

Although there is a possibility that the district where GVM or EGBM is a main pest insect has environmental conditions suited for proliferation of the main pest insect but not necessarily suited for proliferation of the secondary pest insect, the present invention is not limited to the possibility.

Further, absence of a large difference in the time of emergence or number of generations between these two pest insects may advantageously work, but the present invention is not limited to the absence. It is the common practice to use 500 tubes/ha (from 90 to 120 g/ha) of a GVM sex pheromone mating disruptant, each container containing from 180 to 240 mg of the disruptant. On the other hand, it is the common practice to use 500 tubes/ha (from 100 to 125 g/ha) of a EGBM sex pheromone mating disruptant, each container containing from 200 to 250 mg of the disruptant. Accordingly, as one example, the amount of the EGBM sex pheromone substance to be added to the GVM sex pheromone mating disruptant is from 9 to 72 mg/container (from 4.5 to 36 g/ha) and the amount of the GVM sex pheromone substance to be added to the EGBM sex pheromone mating disruptant is from 10 to 87.5 mg/container (from 5 to 43.75 g/ha). It has already been known that in the former case, simultaneous control can be achieved even by reducing the above-described typical amount of the sex pheromone substance to from 5 to 31.3 g/ha unless the population density of EGBM shows a marked increase. The effect of the sex pheromone substance varies depending on an application area, an average wind speed, a training method of fruit trees, heights of the trees or the like. For example, in orchards where a GVM sex pheromone mating disruptant is used, the condition and the amount of application suited for each farm condition are empirically known. Accordingly, in a wide farm with moderate wind, control is performed with a reduced application amount. Such a wide farm with moderate wind is a good condition for the sex pheromone mating disruptant to produce an intended effect so that the amount of application of the EGBM sex pheromone can be sometimes decreased. However, the present invention is not limited to this condition.

Although the mating disruptant can be provided in any form insofar as it is a container or a carrier capable of retaining the GVM sex pheromone substance and EGBM sex pheromone substance and releasing them gradually. It may be provided preferably in a tube, a capsule, an ampoule or a bag. Of these, the tube is most suited because it can release the sex pheromone and the like uniformly for a long period of time. The tube having a preferable inner diameter of from 0.5 to 2.0 mm and a preferable thickness of from 0.2 to 1.0 mm can keep releasing them at an appropriate rate.

The material of the container is preferably a polyolefin polymer. It may include polyolefins such as polyethylene and polypropylene, and copolymers containing 80% by weight or greater of ethylene such as ethylene-vinyl acetate copolymer and ethylene-acrylate copolymer. Such a material allows the sex pheromone or the like to permeate and be released at an appropriate rate outside of a plastic membrane. The material may also be biodegradable polyester or polyvinyl chloride.

The container in the above-described form may have one or more chambers for enclosing therein a disruptant solution. When it has two or more chambers, their inner diameters or thicknesses may be different from each other. In addition, the mixture solution may be enclosed at least in one chamber. Even when a mating disruptant meets the above-described conditions, the mate disruptant having a substance which requires a special place for handling or the mate disputant which adversely affects the environment is not preferred.

### EXAMPLES

The present invention will hereinafter be described by Examples. However, it should not be construed that the invention is limited to or by them.

### <Preparation of mating disruptant>

A polymer container in the form of a polyethylene tube having a predetermined inner diameter and thickness was manufactured by extrusion. Then, an intended sex pheromone composition was prepared by adding a predetermined amount of a sex pheromone substance of a secondary pest insect to a sex pheromone substance of a main pest insect, depending on the percentage of damage in the previous year. After the resulting solution was poured from one end of the polyethylene tube, a pressure was applied to both ends of the tube with a heated iron to melt and seal them. The melted portions were cut to prepare sustained-release disruptants for the test trial. The resulting mating disruptants were placed at equal intervals in a field subjected to pest insect control so as to release a necessary amount of the sex pheromone substances. The GVM sex pheromone substance used was E7,Z9-dodecadienyl acetate, while the EGBM sex pheromone substance used was Z9-dodecenyl acetate.

### <Percentage of damaged bunches>

The mating disruption effect is estimated by using the percentage of damaged bunches. Particularly in grapes, the percentage of damaged bunches expressed by {(the number of damaged bunches)/(the number of bunches surveyed)}×100 serves as one of the criteria of the mating disruption effect.

### <Examples 1 to 6 and Comparative Example 1>

In a grape vineyard in the suburbs of Florence in Italy, a GVM sex pheromone mating disruptant was used for 4 years to control GVM which was a main pest insect in the vineyard. On April 25, 500 tubes/ha of a mating disruptant obtained by adding an EGBM sex pheromone substance to the GVM sex pheromone mating disruptant were placed in districts where the population of EGBM was increasing and the percentage of damage due to EGBM was from 0 to 3%, and in districts where EGBM had already emerged and the percentage of damage was from 5 to 7%, respectively. The results are shown in Table 1.

**[TABLE 1]**

| | %of damage due to EGBM in previous year | amounts of sex pheromone substances | | | | | % of damaged bunches | | | |
|---|---|---|---|---|---|---|---|---|---|---|
| | | GVM | | EGBM | | | No.1 | No.2 | No.3 | average |
| | | (mg/tube) | (g/ha) | (mg/tube) | (g/ha) | (wt%) | (6/25) | (7/22) | (8/30) | |
| Example1 | <3% | 200 | 100 | 10 | 5 | 5.0 | 2 | 1 | 0 | 1.0 |
| Example2 | <3% | 200 | 100 | 20 | 10 | 10.0 | 2 | 0 | 0 | 0.7 |
| Example3 | <3% | 200 | 100 | 40 | 20 | 20.0 | 0 | 0 | 0 | 0.0 |
| Example4 | 5-7% | 200 | 100 | 60 | 30 | 30.0 | 2 | 0 | 2 | 1.3 |
| Example5 | 5-7% | 200 | 100 | 50 | 25 | 25.0 | 2 | 4 | 4 | 3.3 |
| Example6 | 5-7% | 200 | 100 | 30 | 15 | 15.0 | 3 | 4 | 4 | 3.7 |
| Comp.Ex.1 | <3% | 200 | 100 | 0 | 0 | 0 | 4 | 6 | 2 | 4.0 |

| | | | | | | | | | | |
|---|---|---|---|---|---|---|---|---|---|---|
| * 500 tubes/ha of pheromone mating disruptants were used. * The weight % of EGBM sex pheromone is based on the weight of a GVM sex pheromone component. | | | | | | | | | | |

In Examples 1 to 3, control was performed with mating disruptants obtained by adding 5% by weight, 10% by weight and 20% by weight of the EGBM sex pheromone substance in the districts where the percentage of damage due to EGBM in the previous year was 3% or less, respectively. The average value for the percentage of damaged bunches in the districts was 1.0%, 0.7% and 0%, respectively, showing good results.
In Examples 4 to 6, control was performed with mating disruptants obtained by adding 30% by weight, 25% by weight and 15% by weight of the EGBM sex pheromone substance in the districts where the percentage of damage due to EGBM in the previous year was from 5 to 7%, respectively. The average value for the percentage of damaged bunches was 1.3% 3.3% and 3.7%, respectively, showing a decrease in the percentage of damaged bunches compared with that of the previous year.

### <Examples 7 to 11 and Comparative Example 2>

In a grape vineyard north of Czechoslovakia where EGBM was a main pest insect, 500 tubes/ha of mating disruptants obtained by adding the GVM sex pheromone substance to an EGBM mating disruptant were placed on May 7 in districts where the population of GVM was increasing and the percentage of damage due to GVM was from 0 to 3%, and in districts where GVM had already emerged and the percentage of damage was from 4 to 7%, respectively. The results are shown in Table 2.

**[TABLE 2]**

| | % of damage due to GVM in previous year | amounts of sex pheromone substances | | | | | % of damaged bunches | | | |
|---|---|---|---|---|---|---|---|---|---|---|
| | | EGBM | | GVM | | | No.1 | No.2 | No.3 | average |
| | | (mg/tube) | (g/ha) | (mg/tube) | (g/ha) | (wt%) | (6/28) | (7/26) | (8/28) | |
| Example7 | 0.2-3% | 220 | 110 | 11 | 5.5 | 5.0 | 0 | 2 | 0 | 0.7 |
| Example8 | 0.2-3% | 220 | 110 | 44 | 22 | 20.0 | 0 | 0 | 0 | 0 |
| Example9 | 4-7% | 220 | 110 | 77 | 38.5 | 35.0 | 3 | 0 | 0 | 1.0 |
| Example10 | 4-7% | 220 | 110 | 55 | 27.5 | 25.0 | 3 | 3 | 3 | 3.0 |
| Example11 | 4-7% | 220 | 110 | 33 | 16.5 | 15.0 | 4 | 4 | 3 | 3.7 |
| Comp.Ex.2 | 0.2-3% | 220 | 110 | 0 | 0 | 0 | 4 | 6 | 6 | 5.3 |

| | | | | | | | | | | |
|---|---|---|---|---|---|---|---|---|---|---|
| * 500 tubes/ha of pheromone mating disruptants were used. * The weight % of GVM sex pheromone is based on the weight of a EGBM sex pheromone component. | | | | | | | | | | |

In Examples 7 and 8, control was performed with mating disruptants obtained by adding 5% by weight of the GVM sex pheromone substance and 20% by weight of the GVM sex pheromone substance in the districts where the percentage of damage due to GVM in the previous year was from 0.2 to 3%. The average value for the percentage of damaged bunches was 0.7% and 0%, respectively, showing good results.
In Examples 9 and 11, control was performed with mating disruptants obtained by adding 35% by weight, 25% by weight and 15% by weight of the GVM sex pheromone substance in the districts where the percentage of damage due to GVM in the previous year was from 4 to 7%. The average value for the percentage of damaged bunches was 1.0%, 3.0% and 3.7%, showing a decrease in the percentage of damage compared with that of the previous year.

## Claims

1. A method for simultaneously controlling European grapevine moth (GVM) and European grape berry moth (EGBM), comprising the steps of:
incorporating, into a GVM sex pheromone mating disruptant, 5 to 30% by weight of an EGBM sex pheromone component based on the amount of the GVM sex pheromone component comprised in the GVM sex pheromone mating disruptant, thereby obtaining a first mating disruptant of GVM and EGBM, or
incorporating, into an EGBM sex pheromone mating disruptant, 5 to 35% by weight of a GVM sex pheromone component based on the amount of an EGBM sex pheromone component comprised in the EGBM sex pheromone mating disruptant thereby obtaining a second mating disruptant of GVM and EGBM; and
distributing the first mating disruptant of GVM and EGBM to a district A at the time when in the district A, where GVM is a main pest insect, a secondary pest insect EGBM has emerged, or is likely to emerge, or
distributing the second mating disruptant of GVM and EGBM to a district B at the time when in the district B, where EGBM is a main pest insect, a secondary pest insect GVM has emerged, or is likely to emerge.

2. The method for simultaneously controlling GVM and EGBM according to Claim 1, wherein 5 to 20% by weight of the EGBM sex pheromone component based on the amount of the GVM sex pheromone component comprised in the GVM sex pheromone mating disruptant is incorporated when a percentage of damage due to the secondary pest insect EGBM in a previous year is from 0 to 3% in the district A.

3. The method for simultaneously controlling GVM and EGBM according to Claim 1, wherein greater than 10% by weight but not greater than 30% by weight of the EGBM sex pheromone component based on the amount of the GVM sex pheromone component comprised in the GVM sex pheromone mating disruptant is incorporated when a percentage of damage due to the secondary pest insect EGBM in a previous year exceeds 3% in the district A.

4. The method for simultaneously controlling GVM and EGBM according to any one of Claims 1 to 3, wherein the time when the secondary pest insect EGBM has emerged, or is likely to emerge, in the district A is prior to the emergence of the main pest insect GVM and the EGBM.

5. The method for simultaneously controlling GVM and EGBM according to Claims 3, wherein 5 to 20% by weight of the GVM sex pheromone component based on the amount of the EGBM sex pheromone component comprised in the EGBM sex pheromone mating disruptant is incorporated when the percentage of damage due to the secondary pest insect GVM in the previous year is from 0 to 3% in the district B.

6. The method for simultaneously controlling GVM and EGBM according to Claim 3, wherein greater than 10% by weight but not greater than 35% by weight of the GVM sex pheromone component based on the amount of the EGBM sex pheromone component comprised in the EGBM sex pheromone mating disruptant is incorporated when the percentage of damage due to the secondary pest insect GVM in the previous year exceeds 3% in the district B.

7. The method for simultaneously controlling GVM and EGBM according to any one of Claims 3 to 6, wherein the time when the secondary pest insect GVM has emerged, or is likely to emerge, in the district B is prior to the emergence of the main pest insect EGBM and the GVM.

8. A mating disruptant for the simultaneous control of GVM and EGBM comprising at least an GVM sex pheromone substance and an EGBM sex pheromone substance,
wherein the mating disruptant comprises 5 to 30 parts by weight of the EGBM sex pheromone substance based on 100 parts by weight of the GVM sex pheromone substance, or comprises 5 to 35 parts by weight of the GVM sex pheromone substance based on 100 parts by weight of the EGBM sex pheromone substance.

9. The mating disruptant for the simultaneous control of GVM and EGBM according to Claim 8, wherein the GVM sex pheromone substance is E7,Z9-dodecadienyl acetate and the EGBM sex pheromone substance is Z9-dodecenyl acetate.
